# EUROPÄISCHE PATENTSCHRIFT

(11) **EP 2 764 648 B1**
(45) Veröffentlichungstag und Bekanntmachung des Hinweises auf die Patenterteilung: **26.02.2020**
(21) Anmeldenummer: 12769966.8
(22) Anmeldetag: 06.09.2012
(51) Int. Cl.: H04L 1/04, H04L 1/08, H04L 1/22, H04L 1/00, H04L 1/06

(54) **VERFAHREN ZUR LAUFZEITOPTIMIERUNG BEI PAKETORIENTIERTER MOBILFUNKÜBERTRAGUNG VON DATENTELEGRAMMEN**
METHOD FOR RUNTIME OPTIMIZATION IN THE PACKET ORIENTED MOBILE RADIO TRANSMISSION OF DATA TELEGRAMS
PROCÉDÉ D'OPTIMISATION DE TEMPS DE PROPAGATION LORS D'UNE TRANSMISSION DE TÉLÉGRAMMES DE DONNÉES DANS UN SYSTÈME DE RADIOCOMMUNICATION MOBILE À COMMUTATION DE PAQUETS

(30) Priorität: 12.10.2011 DE 102011084344
(43) Veröffentlichungstag der Anmeldung: 13.08.2014
(73) Patentinhaber: Siemens Mobility GmbH, 81739 München (DE)
(72) Erfinder: KENDELBACHER, Detlef, 13129 Berlin (DE); PLIQUETT, Volker, 12621 Berlin-Kaulsdorf (DE); STEIN, Fabrice, 12621 Berlin (DE)
(86) Internationale Anmeldenummer: PCT/EP2012/067383
(87) Internationale Veröffentlichungsnummer: WO 2013/053551

(56) Entgegenhaltungen:
- EP-A1- 1 404 144
- EP-A2- 1 107 498
- US-A1- 2004 027 999
- US-A1- 2004 199 662
- US-B1- 6 801 499
- Fisher D G: "Boundaries between ETCS and the GSM-R Network", Banedanmark , April 2008 (2008-04), Seiten 1-16, XP002688936, Gefunden im Internet: URL:http://uk.bane.dk/db/filarkiv/5589/Bou ndaries%20between%20ETCS%20and%20the%20GSM -R%20network.pdf [gefunden am 2012-12-05]

## Beschreibung

Die Erfindung betrifft ein Verfahren zur Laufzeitoptimierung bei paketorientierter Mobilfunkübertragung von Datentelegrammen zwischen Schienenfahrzeugen und ortsfesten Streckeneinrichtungen, zwischen Schienenfahrzeugen und/oder zwischen ortsfesten Streckeneinrichtungen für ein ETCS - European Train Control System - ab Level 2.

Das ETCS definiert einen europäischen Standard für Zugsteuerungssysteme. Ab Level 2 des ETCS erfolgt eine Mobilfunkübertragung von Datentelegrammen zwischen Schienenfahrzeugen und ortsfesten Streckeneinrichtungen, insbesondere Steuerungseinrichtungen, auf Basis des GSM-Mobilfunks. Die Protokolle zur Mobilfunkübertragung werden durch den sogenannten EURORADIO-Standard beschrieben.

Nach dem Stand der Technik werden für derzeit im ETCS-Betrieb befindliche Anlagen verbindungsorientierte Datendienste verwendet. Diese Dienste stellen eine transparente Mobilfunkübertragung von Datentelegrammen mit definiertem Durchsatz und einer garantierten maximalen Laufzeit, beziehungsweise Latenzzeit, bereit.

Die Verfügbarkeit einer ausreichend hohen Datenübertragungsqualität, das heißt Quality of Service - QoS - ist eine entscheidende Grundlage für die Effizienz des ETCS-Betriebes. Bahnbetreiber errichten deshalb für ETCS-Strecken eine eigene GSM-Funkinfrastruktur entlang der Strecken, sogenannte GSMR-Netze. GSMR-Netze arbeiten in einem Frequenzband, welches gegenüber dem öffentlichen GSM-Mobilfunknetz verschoben und deutlich schmalbandiger ist.

Mit zunehmender Anzahl und Größe der installierten ETCS-Anlagen tritt das Problem der beschränkten Funkfrequenzen im GSMR auf. Besonders in Eisenbahnknotenpunkten, wie beispielsweise großen Bahnhöfen, kann es infolge zahlreicher paralleler Verbindungsanforderungen für diverse Sprach- und Datendienste zur Überlastung der GSMR-Netze und damit zur Verschlechterung oder Nichtverfügbarkeit von Netzdiensten kommen.

Um zukünftigen Betriebsbehinderungen durch knappe Funkfrequenzen vorzubeugen, wird das EURORADIO-Protokoll zukünftig auf paketorientierte Mobilfunkübertragung erweitert. Mit diesem Übertragungsverfahren können Datentelegramme zwischen Schienenfahrzeugen und Streckeneinrichtungen effizienter und ressourcenschonender übertragen werden.

Der Datenverkehr zwischen Schienenfahrzeug und Streckeneinrichtung tritt sporadisch und diskontinuierlich auf. Zu bestimmten Zeitpunkten werden Datentelegramme von einigen Byte bis Kilobyte ausgetauscht, während zum überwiegenden Teil der Verbindungsdauer keine Datentelegramme zur Übertragung anstehen. Diese Charakteristik eignet sich besonders für paketorientierte Dienste.

Kritisch ist dabei die Laufzeit, das heißt die Übertragungsdauer oder Latenzzeit. Für einen flüssigen Betriebsablauf darf die maximale Latenzzeit der Daten wenige Sekunden, üblicherweise 1 - 3 s, nicht überschreiten. Latenzzeiten im Bereich von 10 s und mehr sind betrieblich nicht akzeptabel.

Die Sicherstellung der geforderten Latenzzeiten ist derzeit ein wesentliches Problem für die Einführung paketorientierter Datendienste - GPRS - im ETCS. Derartige verbindungslose Datendienste stellen im Gegensatz zu den bisher verwendeten verbindungsorientierten Datendiensten keine definierte Transportkapazität mit garantierter maximaler Latenzzeit zur Verfügung. Da der Weg der Daten über die verschiedenen Paketknoten und deren Verarbeitungszeit unbestimmt ist, ergibt sich deren Latenzzeit als stochastische Verteilung. Für die allermeisten Datenpakete ist die Latenzzeit ausreichend klein. Es gibt jedoch Ausnahmen, bei denen es im GPRS zu Übertragungsverzögerungen kommt, die den ETCS-Betrieb behindern und nicht akzeptabel sind.

Der Erfindung liegt die Aufgabe zugrunde, ein Verfahren zur Laufzeitoptimierung bei paketorientierter Mobilfunkübertragung anzugeben, das eine Reduzierung der Häufigkeit von Übertragungsverzögerungen ermöglicht, so dass die für den Bahnbetrieb erforderliche QoS orts- und zeitinvariant sichergestellt werden kann.

Aus der US 2004/0027999 A1 ist eine Segmentierung von Broadcast-Nachrichten für eine kabellose Kommunikation bekannt, wobei jedes Segment mehrfach gesendet wird.

Aus der US 6,801,499 ist ein Verfahren bekannt, bei dem Echtzeitdaten wie z.B. Audio- oder Videodaten mehrfach gesendet werden.

Aus der US 204/0199662 ist ein Verfahren bekannt, bei dem Kopien der Daten über verschiedene Provider gesendet werden.

In der EP 1 404 144 A1 ist ein Verfahren zur Datenübertragung an ein mobiles Gerät in einem kabellosen Netzwerk beschrieben.

Erfindungsgemäß wird die Aufgabe durch das Verfahren nach Anspruch 1 gelöst.

Dabei können die Datentelegramme gemäß Anspruch 2 vor dem Kopieren fragmentiert werden, wobei empfangsseitig nicht verworfene Fragmente wieder zu Datentelegrammen zusammengesetzt werden.

Das erfindungsgemäße Verfahren beruht auf der Einführung einer Diversität für die zu übertragenden ETCS-Nutzdaten mittels Multipath-Übertragung. Die Nutzdaten beziehungsweise Datentelegramme werden dabei nicht nur einmalig von einem Sender an einen Empfänger übertragen, sondern n-malig. Durch ein spezielles Protokoll werden die Nutzdaten sendeseitig kopiert, gegebenenfalls mit redundanten Informationen zur Fehlerkorrektur - FEC-Codierung - versehen und mehrfach abgeschickt. Empfangsseitig sorgt das Protokoll für die Filterung, gegebenenfalls Fehlerkorrektur, und die Reorganisation aller Empfangsdaten, so dass die ETCS-Nutzdaten vollständig und reihenfolgerichtig weiter verarbeitet werden können.

Die Mehrfachübertragung erhöht das Volumen der Datentelegramme. Da die Datentelegramme für das ETCS jedoch sporadischen Charakter und relativ geringen Datenumfang haben, ist durch die mit der Mehrfachübertragung verbundene Spreizung wenig Einfluss auf die Netzlast zu erwarten. Durch ihre Charakteristik, nämlich geringes Übertragungsvolumen, aber hohe Latenzanforderungen, sind die ETCS-Datentelegramme besonders geeignet für die erfindungsgemäße Multipath-Übertragung.

Durch die redundante Multipath-Übertragung der Nutzdaten kann die Verteilung der Latenzzeiten derart beeinflusst werden, dass die Wahrscheinlichkeit für Übertragungsverzögerungen außerhalb der akzeptablen QoS stark verringert werden. Die Multipath-Übertragung verringert die Wahrscheinlichkeit für "Ausreißer" bezüglich der Übertragungsdauer, sofern die Übertragungseigenschaften der Ubertragungskanäle zeitlich und/oder örtlich ausreichend unabhängig voneinander sind.

Die Multipath-Übertragung kann bidirektional eingesetzt werden. In den Übertragungsprotokollen sind dazu sendeseitig und empfangsseitig spezielle Änderungen und Erweiterungen erforderlich.

Vorteilhafte Ausführungsformen sind in den Unteransprüchen gekennzeichnet und werden nachfolgend anhand figürlicher Darstellungen näher erläutert. Es zeigen:
- Figur 1: eine schematische Verfahrensübersicht,
- Figur 2: Verfahrensschritte und
- Figur 3: einen zeitlichen Ablauf zur Durchsatzbegrenzung.

Bei der Multipath-Übertragung entfällt der derzeit im EURORADIO-Protokoll definierte Layer 2 - HDLC-Protokoll asynchron - zur Sicherung der Integrität der Nutzdaten. Weiterhin kann der Layer 3 - T.70 Protokoll zum Segmentieren/Reassemblieren der Nutzdaten - entfallen.

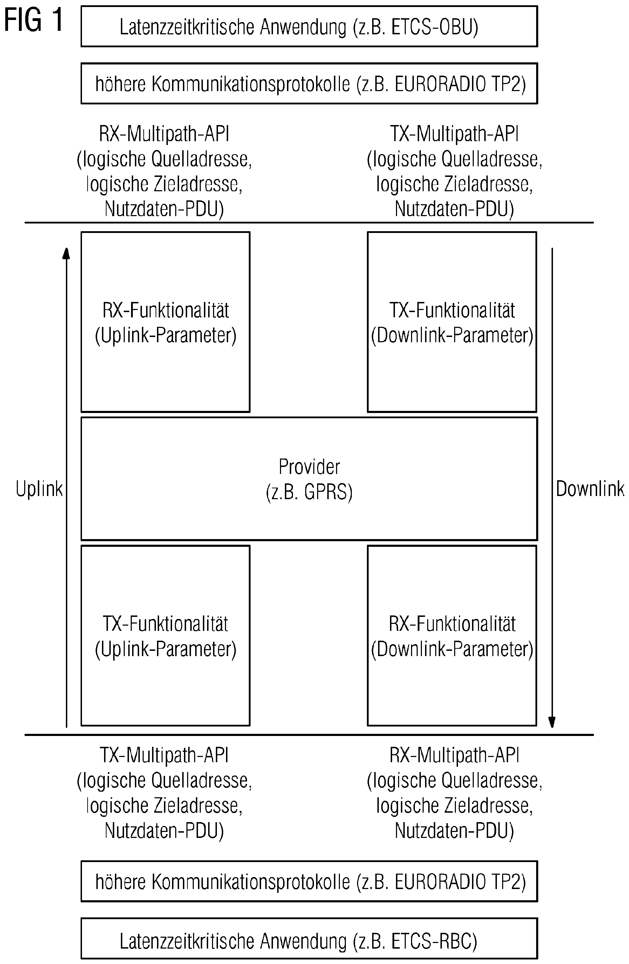

Stattdessen wird im EURORADIO-Protokoll sendeseitig eine TX-Funktion und empfangsseitig eine RX-Funktion integriert, wie Figur 1 zeigt. Die Ausprägungen dieser TX- und RX-Funktionen setzen jeweils auf die Dienste von Providern auf, beispielsweise auf das paketorientierte GPRS.

Höhere EURORADIO-Protolkollschichten - Layer 4: X.224 und Sicherungsprotokoll - können unverändert bleiben. Auch die ETCS-Applikationen auf der Strecken- und Fahrzeugseite bleiben unverändert.

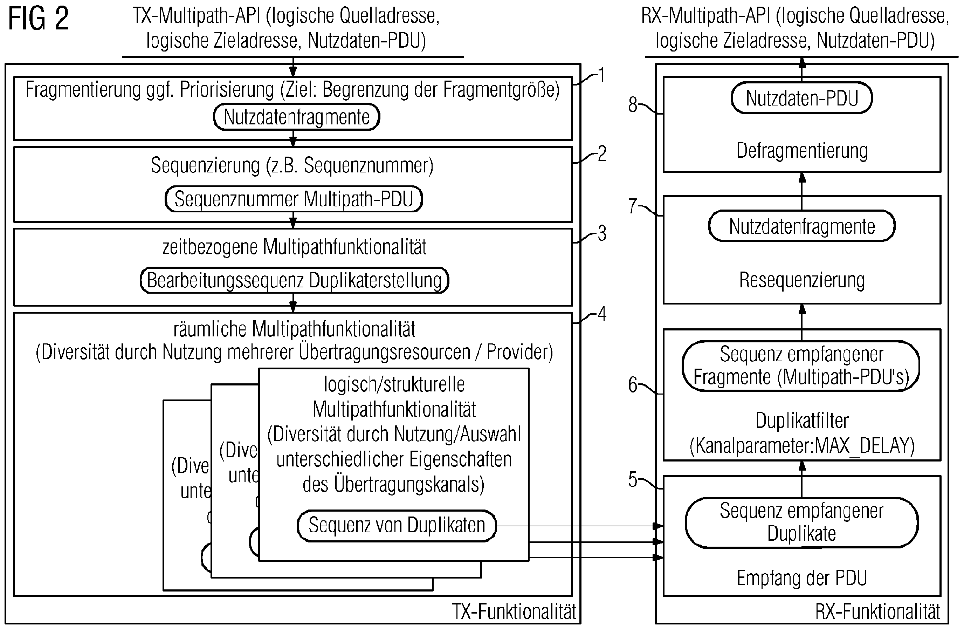

Nachfolgend wird die TX-Funktion anhand Figur 2 näher beschrieben.

Die TX-Funktion stellt den übergeordneten Protokollschichten eine Zugangsschnittstelle - API - für die Übergabe der Daten - Nutzdaten-PDU - bereit. Neben der Nutzdaten-PDU werden die logische Quelladresse - ETCS-ID/Sender - und die logische Zieladresse - ETCS-ID/Empfänger - übergeben.

Nach Übergabe der Nutzdaten-PDU an die API erfolgt deren Bearbeitung durch die TX-Funktion.

Vor ihrer weiteren Verarbeitung werden übergebene Nutzdaten-PDU gegebenenfalls hinsichtlich ihrer Übertragungspriorität bewertet. Nutzdaten-PDU mit hoher Priorität - HP-Datentelegramme - werden bevorzugt bearbeitet und überholen gegebenenfalls im TX-Modul noch nicht bearbeitete Nutzdaten-PDU mit niedrigerer Priorität. Die Priorisierung ist eine optionale Eigenschaft der TX- und RX-Funktion in Anlehnung an die Übertragung von Notinformationen in HDLC-UI-Frames.

Die Priorisierungskennzeichnung der HP-Daten im derzeitigen EURORADIO-Protokoll oberhalb HDLC erfolgt durch lokale, in der jeweiligen PDU nicht sichtbare Attribute. Im TX-Modul erfolgt - wie auch mittels HDLC-UI-Frame - eine spezielle Kennzeichnung der HP-Datentelegramme, damit im RX-Modul zwischen HP-Datentelegrammen und normalen Datentelegrammen unterschieden werden kann.

Die sendeseitige Verarbeitung jeder Nutzdaten-PDU im TX-Modul erfolgt in vier Schritten.

### Erster Schritt: Fragmentierung 1

Im ersten Schritt werden Nutzdaten-PDU, die eine festgelegte Größe überschreiten, in Fragmente segmentiert. Die maximale Größe der Fragmente ist ein festgelegter Parameter, der vorteilhaft an die Übertragungseigenschaften der jeweiligen Übertragungsrichtung des Datenkanals angepasst wird. Je höher die durchschnittliche Störungsrate bei der Übertragung ist, je kürzer sollten die Fragmente der Nutzdaten-PDU sein.

Das letzte Fragment einer jeden Nutzdaten-PDU wird in diesem Schritt mit einem speziellen Kennzeichen versehen, welches den Abschluss der Nutzdaten-PDU eindeutig kennzeichnet und dem Empfänger ermöglicht, die fragmentierte Nutzdaten-PDU wieder zusammenzusetzen.

### Zweiter Schritt: Sequenzierung 2

Jedes Fragment erhält ein eindeutiges Sequenzkennzeichen entsprechend der Reihenfolge im Datenstrom, beispielsweise durch eine Sequenznummer. Der Vorrat an Sequenzkennzeichen muss ausreichend groß sein, um alle zwischen Sender und Empfänger auf der Übertragungsstrecke befindlichen Nutzdaten-Fragmente innerhalb eines definierten maximalen Zeitfensters unterscheidbar zu kennzeichnen.

Sequenzkennzeichen können für die rechentechnische Umsetzung, beispielsweise mittels Umlaufzähler, wieder verwendet werden. Eine erneute sendeseitige Verwendung eines Sequenzkennzeichens darf jedoch erst dann erfolgen, wenn sichergestellt ist, dass keine Kopien von Nutzdaten-Fragmenten mit dem gleichen Sequenzkennzeichen aus einem der Übertragungskanäle empfangsseitig mehr übergeben werden können. Das ist nach einer maximalen, providerabhängigen Wartezeit der Fall - Kanalparameter: RX_MAX_DELAY. Nach Ablauf dieser Wartzeit werden gesendete Daten garantiert nicht mehr empfangsseitig übergeben.

Der Wertevorrat für Sequenzkennzeichen muss groß genug sein, um die maximale Anzahl möglicher Nutzdaten-PDU-Fragmente innerhalb der Wartzeit RX_MAX_DELAY eindeutig sequenzieren zu können. Dieser Wertevorrat kann für ETCS aus dem maximalen Datendurchsatz und dem providerspezifischen RX_MAX_DELAY berechnet werden. Üblicherweise liegt der RX_MAX_DELAY in der Größenordnung von 30 min.

Zusätzlich kann in diesem zweiten Schritt eine Kennzeichnung der Übertragungspriorität erfolgen. In diesem Fall ist es vorteilhaft, die Sequenzkennzeichnung für jede Priorität zu separieren.

### Dritter Schritt: Multipathsteuerung zeitlich 3

Im dritten Schritt erfolgt das Kopieren der Nutzdaten-PDU-Fragmente nach einer festgelegten Vorschrift, welche auch bestimmt, in welchen zeitlichen Abständen und/oder in welchen Übertragungskanälen ein Nutzdaten-PDU-Fragment redundant, das heißt mehrfach, gesendet wird. Die Kopien - gegebenenfalls mit FEC-Codierung - werden zu festgelegten Zeitpunkten an die jeweils dafür vorgesehenen Übertragungskanäle übergeben. Zum Zeitpunkt t1 werden x Kopien des Nutzdaten-PDU-Fragmentes an x Übertragungskanäle übergeben. Zum Zeitpunkt t2 werden y Kopien des Nutzdaten-PDU-Fragmentes an y Übertragungskanäle übergeben und so weiter.

Die in dieser Vorschrift festgelegte Anzahl der Sendezeitpunkte, deren Abstand zueinander und die Anzahl der zum jeweiligen Zeitpunkt zu übergebenden Kopien der Nutzdaten-PDU-Fragmente ist flexibel definierbar. Vorzugsweise wird die zeitliche Spreizung abhängig von dem Zeit- und Fehlerverhalten der Kanalcharakteristik des Providers durchgeführt, wobei dazu gegebenenfalls Messungen zur Feststellung eines kanalangepassten Verhaltens durchzuführen sind.

Bei Kenntnis einer providertypischen Stördauer, beispielsweise bedingt durch Zellhandover im Mobilfunknetz, wird der Sendezyklus vorzugsweise etwa doppelt so lang wie die durchschnittliche Störungsdauer vorgegeben.

### Vierter Schritt: Multipathsteuerung räumlich 4

Im vierten Schritt werden die zu einem bestimmten Zeitpunkt übergebenen Kopien eines Nutzdaten-PDU-Fragments an unterschiedliche Übertragungskanäle eines oder mehrerer Provider übergeben. Ein Übertragungskanal ist dabei die Kombination aus einer physischen Kanalreferenz, zum Beispiel IP-Kommunikationszugang zu einem gegebenen GPRS-Provider, und logischen Übertragungseigenschaften, zum Beispiel Subnetzeigenschaften oder beteiligte Kommunikationsabschnitte entsprechend projektierter Routingvorschrift.

Beispielsweise können die Kopien eines Nutzdaten-PDU-Fragments zu einem Zeitpunkt t1 folgendermaßen vierfach übertragen werden:
- als Paket über IP-Kommunikationszugang 1 an das Paket-netz des Providers A
- als Paket über IP-Kommunikationszugang 2 an das Paket-netz des Providers A
- als Paket über IP-Kommunikationszugang 0 an das Paket-netz des Providers B und
- als Paket über IP-Kommunikationszugang 1 an das Paket-netz des Providers B.

Die räumliche Multipathsteuerung im vierten Schritt wird für jeden der im dritten Schritt, nämlich der zeitlichen Multipathsteuerung, definierten Zeitpunkte t1, t2 ... erneut ausgeführt. Dabei kann zu jedem Zeitpunkt t1, t2 ... eine individuelle Vorschrift für die räumliche Multipathsteuerung angegeben werden, so dass die Anzahl und die benutzten Übertragungskanäle zu den Zeitpunkten t1, t2 ... unterschiedlich sein können.

Durch die räumliche Diversifizierung des Nutzdaten-PDU-Fragments wird den unterschiedlichen Eigenschaften der verfügbaren Übertragungskanäle Rechnung getragen. Sofern mehrere Provider verfügbar sind, können Kopien des Nutzdaten-PDU-Fragments an verschiedene Provider übergeben werden, wodurch die Wahrscheinlichkeit für eine korrekte Übertragung innerhalb der geforderten maximalen Latenzzeit erhöht werden kann. Weiterhin können auch innerhalb eines Providers gleichzeitig mehrere Kopien an unterschiedliche Übertragungskanäle übergeben werden, sofern der Provider alternative Übertragungskanäle oder Subnetze mit gegebenenfalls unterschiedlichen Prioritäten oder QoS-Klassen bereitstellt. Da der Weg der Daten im Paket-Netz des Providers relativ unbestimmt ist und die einzelnen Datenpakete beziehungsweise Datentelegramme voneinander unabhängig sind, kann durch jede Kopie eines Nutzdaten-PDU-Fragments in verschiedenen möglichst unabhängigen Übertragungskanälen eine Erhöhung der Wahrscheinlichkeit für die Einhaltung der zulässigen Übertragungsverzögerung oder Latenzzeit erreicht werden. Um die Daten an unterschiedliche Provider zu übergeben, können beispielsweise mehrere Mobilfunkgeräte verwendet werden, die in unterschiedlichen Providernetzen eingebucht sind.

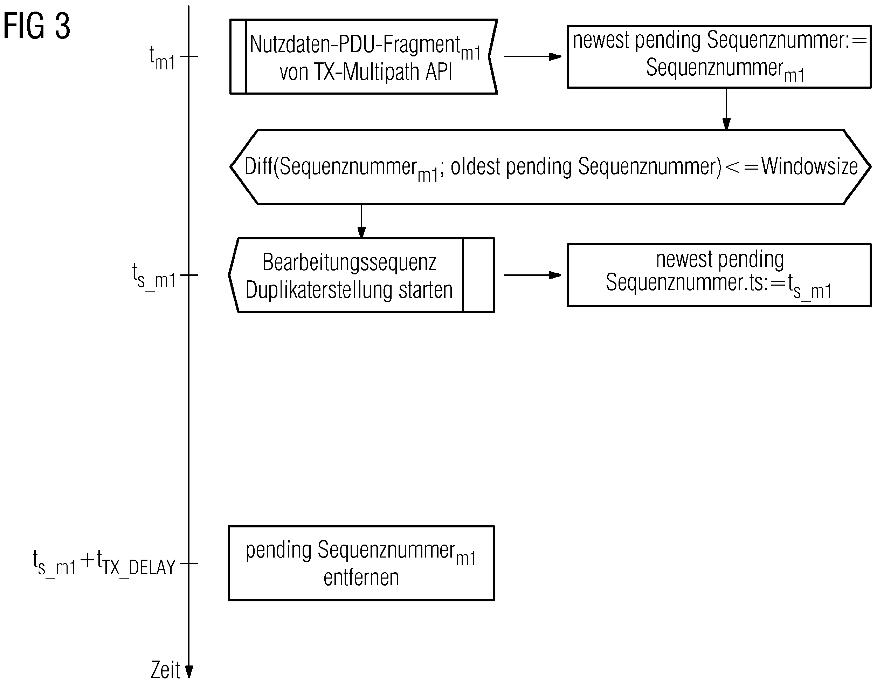

Figur 3 veranschaulicht einen zeitlichen Ablauf zur Durchsatzbegrenzung. Durch die mehrfache Übertragung von Nutzdaten-PDU-Fragmenten über alternative Übertragungskanäle wird der Datendurchsatz im Übertragungsnetz erhöht. Da die Übertragungskapazität bei der Mobilfunkkommunikation eine begrenzte Ressource ist und bei der Überschreitung von bestimmten Netzlasten wiederum negative Auswirkungen auf die Latenzzeiten entstehen, muss der durch das Multipathverfahren bedingte Mehrdurchsatz sinnvoll beschränkt werden. Hierzu eignet sich beispielsweise die Verwendung einer aus der Technologie für Übertragungsprotokolle bekannten Fenstertechnik - Windowsize. Die komplette senderseitige Bearbeitung eines Nutzdaten-PDU-Fragments benötigt eine bestimmte Zeit t_{s_m1}. Der zeitlich spätestmögliche Empfangszeitpunkt der zuletzt gesendeten Kopie dieses Nutzdaten-PDU-Fragments ist t_{s_m1}+t_{TX_DELAY·} Üblicherweise liegt t_{TX_DELAY} in der Größenordnung von einigen Sekunden. Das bedeutet, dass ein gesendetes Nutzdaten-PDU-Fragment während dieses Zeitraumes innerhalb des betrachteten Sendefensters verbleibt. Zu jedem Zeitpunkt werden nur weitere zu versendende Nutzdaten-PDU-Fragmente sendeseitig verarbeitet, wenn die Anzahl der im Sendefenster enthaltenden Nutzdaten-PDU-Fragmente kleiner als die maximal zulässige Windowsize ist, wodurch sich eine Limitierung der gesendeten Nutzdaten-PDU-Fragmente pro Zeiteinheit ergibt.

Nachfolgend wird die RX-Funktion anhand Figur 2 näher beschrieben.

Die RX-Funktion stellt auf der Empfangsseite der ETCS-Daten an der RX-Multipath-API die Nutzdaten-PDU-Fragmente inklusive der logischen Quell- und Zieladresse - ETCS-ID/Sender und ETCS-ID/Empfänger - für die höheren Protokollschichten zur Verfügung.

Die an der API übergebenen Nutzdaten-PDU-Fragmente entsprechen in Länge, Inhalt und Reihenfolge der der Sendeseite. Nutzdaten-PDU-Fragmente gehen nicht unerkannt verloren.

Die RX-Funktion setzt auf die Dienste mindestens eines Providers auf und verarbeitet empfangene Nutzdaten-PDU-Fragmente in folgenden vier Schritten:
Erster Schritt: Empfang der Nutzdaten-PDU-Fragmente 5

Durch die RX-Funktion werden alle im Multipath-Verfahren übermittelten Nutzdaten-PDU-Fragmente empfangen. Die Kopien dieser Fragmente können parallel oder zeitversetzt von verschiedenen Übertragungskanälen, das heißt von unterschiedlichen Providern, Mobilfunkgeräten und/oder Übertragungskanälen mit unterschiedlichen logischen Übertragungseigenschaften, eintreffen. Alle Nutzdaten-PDU-Fragmente werden angenommen und in der Reihenfolge ihres Eintreffens der Verarbeitung im zweiten Schritt zugeführt.

### Zweiter Schritt: Duplikatefilterung 6

Im zweiten Schritt werden die Kopien der empfangenen Nutzdaten-PDU-Fragmente gefiltert. Alle eintreffenden Nutzdaten-PDU-Fragmente werden anhand ihres Sequenzkennzeichens selektiert. Das jeweils erste Nutzdaten-PDU-Fragment eines Sequenzkennzeichens wird an den dritten Verarbeitungsschritt - die Resequenzierung 7 - übergeben. Alle weiteren Duplikate des gleichen Sequenzkennzeichens werden innerhalb des Zeitraumes T_{RX_MAX_DELAY} - bezogen auf den Übergabezeitpunkt des ersten Nutzdaten-PDU-Fragments mit dem gleichen Sequenzkennzeichen an den dritten Verarbeitungsschritt - verworfen.

### Dritter Schritt: Resequenzierung 7

Nutzdaten-PDU-Fragmente können in beliebiger Reihenfolge eintreffen, da sie unterschiedliche und unbestimmte Wege im Übertragungsnetz nehmen. Deshalb muss die ursprüngliche Reihenfolge der Nutzdaten-PDU-Fragmente von der RX-Funktion im dritten Verarbeitungsschritt wieder hergestellt werden. Dazu wird das aktuell erwartete Sequenzkennzeichen, zum Beispiel der erwartete Zählerstand, verwaltet. Sobald ein Nutzdaten-PDU-Fragment mit einem Sequenzkennzeichen empfangen wird, welches dem aktuell erwarteten Sequenzkennzeichen entspricht, wird das Sequenzkennzeichen, zum Beispiel der Sequenzzähler, entsprechend erhöht und das Nutzdaten-PDU-Fragment wird an den vierten Verarbeitungsschritt - die Defragmentierung 8 - übergeben.

Jedes Nutzdaten-PDU-Fragment, dessen Sequenzkennzeichen größer als das erwartete Sequenzkennzeichen ist, wird so lange zwischengespeichert, bis das erwartete Sequenzkennzeichen auf den Wert des Sequenzkennzeichens des zwischengespeicherten Nutzdaten-PDU-Fragmentes erhöht wurde. Erst dann wird das zwischengespeicherte Nutzdaten-PDU-Fragment an den vierten Verarbeitungsschritt - die Defragmentierung 8 - übergeben. Nutzdaten-PDU-Fragmente, die länger als RX_MAX_DELAY auf RX-Seite zwischengespeichert wurden, werden ebenfalls verworfen. Durch die höheren Protokollschichten können im Falle von anhaltenden Übertragungsstörungen die betroffenen Kommunikationskanäle als Fehlerkorrektur abgebaut werden.

Somit werden die Nutzdaten-PDU-Fragmente sequenzrichtig, das heißt in der Reihenfolge ihrer Generierung, lückenlos an den vierten Verarbeitungsschritt weitergegeben.

### Vierter Schritt: Defragmentierung 8

Eintreffende Nutzdaten-PDU-Fragmente müssen vor ihrer Übergabe an die höheren Protokollschichten wieder zu vollständigen Nutzdaten-PDUs zusammengesetzt werden. Dieses erfolgt im vierten Schritt der empfangsseitigen RX-Verarbeitung. In diesem Verarbeitungsschritt werden die Nutzdaten-PDU-Fragmente in ihrer korrekten Reihenfolge so lange zwischengespeichert, bis eine vollständige Nutzdaten-PDU empfangsseitig vorliegt. Erst dann werden alle zu einer Nutzdaten-PDU gehörigen Nutzdaten-PDU-Fragmente sequenzrichtig zur Nutzdaten-PDU zusammengesetzt und als komplette Nutzdaten-PDU an die höheren Protokollschichten übergeben. Der Multipath-Protokolloverhead wird beim Defragmentieren entfernt, das heißt, die empfangsseitig zu verwerfenden Duplikate der Segmente werden gelöscht.

Das erfindungsgemäße Verfahren kann in unterschiedlichen Ausprägungen und Varianten realisiert werden. Die Möglichkeiten zur zeitlichen und örtlichen Spreizung der zu übertragenden Nutzdaten-PDU-Fragmente können flexibel eingesetzt und kombiniert werden. Beispielsweise kann die Multipath-Übertragung derart zeitlich und örtlich kombiniert werden, dass die Nutzdaten-PDU-Fragmente an zwei unterschiedliche Provider zeitversetzt übergeben werden. Auch eine Beschränkung auf ausschließlich zeitliche oder örtliche Spreizung ist möglich.

Eine weitere Ausprägung des erfindungsgemäßen Verfahrens besteht darin, die Sendevorschrift in Abhängigkeit der aktuellen Übertragungseigenschaften der Übertragungspfade zu variieren. Beispielsweise kann für den Fall, dass ein Provider-Netz gestört ist, automatisch zu einem anderen Provider gewechselt werden, wobei zum Beispiel alternativ öffentliche und nicht öffentliche Mobilfunknetze genutzt werden können.

Weiterhin können mit dem erfindungsgemäßen Multipath-Verfahren Nutzdaten-PDU-Fragmente selektiv behandelt werden. Beispielsweise können ausschließlich zeitkritische Datentelegramme beziehungsweise deren Fragmente mehrfach gesendet werden, während normale Datentelegramme nur einmal übertragen werden.

Auch eine Variation der Anzahl der redundanten Übertragungen in Abhängigkeit verschiedener Kenngrößen, wie beispielsweise Datenaufkommen, Ort, verfügbare Übertragungskanäle, Geschwindigkeit oder Störungshäufigkeit, ist möglich.

Die zeitliche Spreizung der Sendedaten kann mit unterschiedlichem Zeitversatz erfolgen. Beispielsweise kann vor jedem erneuten Senden eines kopierten Nutzdaten-PDU-Fragments die Wartezeit vergrößert werden.

## Patentansprüche

1. Verfahren zur Laufzeitoptimierung bei paketorientierter Mobilfunkübertragung von Datentelegrammen zwischen Schienenfahrzeugen und ortsfesten Streckeneinrichtungen, zwischen Schienenfahrzeugen und/oder zwischen ortsfesten Streckeneinrichtungen für ein ETCS - European Train Control System - ab Level 2, wobei die Datentelegramme sendeseitig mehrfach zeitversetzt und über mehrere Übertragungskanäle, deren Störverhalten zeitlich und kanalbezogen wenig oder nicht korreliert ist, als Kopien gesendet werden, wobei die Datentelegramme kopiert werden und Zeitpunkte (t₁, t₂ ...) definiert werden, an denen die Kopien an die vorgesehenen Übertragungskanäle übergeben werden (3), und die zu einem bestimmten Zeitpunkt (t₁, t₂ ...) übergebenen Kopien an unterschiedliche Übertragungskanäle mehrerer Provider zum Senden übergeben werden (4), wobei die unterschiedlichen Übertragungskanäle durch unterschiedliche Provider, Mobilfunkgeräte und/oder Übertragungskanäle mit unterschiedlichen logischen Übertragungseigenschaften ausgebildet sind, und dass empfangsseitig die Kopien verworfen (6) und die Datentelegramme in der ursprünglichen Reihenfolge reorganisiert werden (7, 8), wobei die zeitliche und/oder räumliche Spreizung durch das mehrfach zeitversetzte und über mehrere Übertragungskanäle erfolgte Senden der Kopien der Datentelegramme oder deren Fragmente providerabhängig erfolgt.

2. Verfahren nach Anspruch 1,
d**adurch gekennzeichnet,** dass
die Datentelegramme sendeseitig vor dem Kopieren fragmentiert werden und die empfangsseitig nicht verworfenen Fragmente wieder zu Datentelegrammen zusammengesetzt werden.

3. Verfahren nach einem der vorangehenden Ansprüche,
d**adurch gekennzeichnet,** dass
die Datentelegramme oder deren Fragmente sendeseitig mit Sequenzkennzeichen entsprechend ihrer Reihenfolge versehen werden.

4. Verfahren nach einem der vorangehenden Ansprüche,
d**adurch gekennzeichnet,** dass
empfangsseitig die zu verwerfenden Kopien der Datentelegramme oder deren Fragmente gelöscht werden.

5. Verfahren nach einem der vorangehenden Ansprüche,
**dadurch gekennzeichnet, dass**
Datentelegramme oder deren Fragmente sendeseitig mit Priorisierungskennzeichen versehen und empfangsseitig in der Reihenfolge ihrer Priorisierung reorganisiert werden.

6. Verfahren nach einem der vorangehenden Ansprüche,
**dadurch gekennzeichnet, dass**
die zeitliche und/oder räumliche Spreizung durch das mehrfach zeitversetzte und über mehrere Übertragungskanäle erfolgte Senden der Kopien der Datentelegramme oder deren Fragmente medienabhängig erfolgt.

7. Verfahren nach einem der vorangehenden Ansprüche,
**dadurch gekennzeichnet, dass**
eine Übertragung von Kopien der Datentelegramme oder deren Fragmente in beide Übertragungsrichtungen vorgesehen ist, wobei eine zeitliche und räumliche Spreizung durch das mehrfache Senden der Kopien der Datentelegramme oder deren Fragmente richtungsabhängig erfolgt.

## Claims

1. Method for runtime optimisation during packet-oriented mobile radio transmission of data telegrams between rail vehicles and fixed-location lineside devices, between rail vehicles and/or between fixed-location lineside devices for an ETCS - European Train Control System - from Level 2, wherein the data telegrams are time-offset multiple times on the transmit side and are sent as copies over a plurality of transmission channels, the fault behaviour of which has little to no correlation in relation to time and channel, wherein the data telegrams are copied and points in time (t₁, t₂ ...) are defined, at which the copies are forwarded to the provided transmission channels (3), and the copies forwarded at a particular point in time (t₁, t₂ ...) are forwarded to different transmission channels of a plurality of providers for transmission (4), wherein the different transmission channels are embodied by different providers, mobile radio devices and/or transmission channels with different logical transmission properties, and that the copies are discarded on the receive side (6) and the data telegrams are reorganised in the original order (7, 8), wherein the temporal and/or spatial spread takes place on a provider-dependent basis due to the copies of the data telegrams or fragments thereof being transmitted with multiple time offsets, taking place over a plurality of transmission channels.

2. Method according to claim 1,
**characterised in that**
the data telegrams are fragmented on the transmit side before copying and the fragments which have not been discarded on the receive side are reassembled to form data telegrams again.

3. Method according to one of the preceding claims,
**characterised in that**
the data telegrams or fragments thereof are provided with sequence markers on the transmit side according to their order.

4. Method according to one of the preceding claims,
c**haracterised in** that
the copies of the data telegrams or fragments thereof, which are to be discarded, are deleted on the receive side.

5. Method according to one of the preceding claims,
**characterised in that**
data telegrams or fragments thereof are provided with prioritisation markers on the transmit side and are reorganised in the order of their prioritisation on the receive side.

6. Method according to one of the preceding claims,
**characterised in that**
the temporal and/or spatial spread takes place on a medium-dependent basis due to the copies of the data telegrams or fragments thereof being transmitted with multiple time offsets and taking place over a plurality of transmission channels.

7. Method according to one of the preceding claims,
**characterised in that**
a transmission of copies of the data telegrams or fragments thereof is provided in both transmission directions, wherein a temporal and spatial spread takes place on a direction-dependent basis due to the copies of the data telegrams or fragments thereof being transmitted multiple times.

## Revendications

1. Procédé d'optimisation du temps de parcours dans la transmission de télégrammes de données par radiocommunication mobile entre des véhicules ferroviaires et des dispositifs de voie à poste fixe, entre des véhicules ferroviaires et/ou entre des dispositifs de voie à poste fixe, pour un ETCS - European Train Control System - à partir du niveau 2, dans lequel on envoie, en copies, les télégrammes de données du côté de l'émission plusieurs fois d'une manière décalée dans le temps et par plusieurs canaux de transmission, dont le comportement à la perturbation dans le temps et rapporté au canal est peu ou pas corrélé, les télégrammes de données étant copiés et des instants (t₁, t₂, ...) étant définis, où les copies sont remises (3) aux canaux de transmission prévus et les copies remises à un instant (t₁, t₂, ...) déterminé étant remises (4) pour l'émission à des canaux de transmission différents de plusieurs fournisseurs d'accès, les canaux de transmission différents étant constitués par des fournisseurs d'accès des appareils de radiocommunication mobile et/ou des canaux de transmission différents à propriétés de transmission logiques différentes et en ce que, du côté de la réception, on rejette (6) les copies et on réorganise (7, 8), dans l'ordre d'origine, les télégrammes de données, l'étalement temporel et/ou spatial s'effectuant en fonction du fournisseur d'accès par l'envoi, décalé dans le temps plusieurs fois et effectué par plusieurs canaux de transmission, des copies des télégrammes de données ou de leurs fragments.

2. Procédé suivant la revendication 1,
**caractérisé en ce que**
on fragmente les télégrammes de données du côté de l'émission avant la copie et on réunit à nouveau en télégrammes de données les fragments non rejetés du côté de la réception.

3. Procédé suivant l'une des revendications précédentes,
**caractérisé en ce que**
l'on munit, suivant leur ordre, les télégrammes de données ou leurs fragments du côté de l'émission de repères de séquence.

4. Procédé suivant l'une des revendications précédentes,
**caractérisé en ce que**
l'on efface, du côté de la réception, les copies à rejeter des télégrammes de données ou de leurs fragments.

5. Procédé suivant l'une des revendications précédentes,
**caractérisé en ce que**
l'on pourvoit les télégrammes de données ou leurs fragments du côté de l'émission de repères de priorité et on les réorganise du côté de la réception dans l'ordre de leur priorité.

6. Procédé suivant l'une des revendications précédentes,
**caractérisé en ce que**
l'étalement temporel et/ou spatial s'effectue en fonction des supports par l'envoi, décalé dans le temps plusieurs fois et effectué par plusieurs canaux de transmission, des copies des télégrammes de données ou de leurs fragments.

7. Procédé suivant l'une des revendications précédentes,
**caractérisé en ce qu'**
il est prévu une transmission de copies des télégrammes de données ou de leurs fragments dans les deux sens de transmission, un étalement temporel et spatial s'effectuant en fonction du sens par l'envoi plusieurs fois des copies des télégrammes de données ou de leurs fragments.
